# FASCICULE DE BREVET EUROPEEN

(11) **EP 2 575 560 B1**
(45) Date de publication et mention de la délivrance du brevet: **02.04.2014**
(21) Numéro de dépôt: 11723414.6
(22) Date de dépôt: 23.05.2011
(51) Int. Cl.: A47J 31/00

(54) **SYSTEME DE PRODUCTION DE BOISSONS PAR INFUSION**
SYSTEM ZUR HERSTELLUNG VON AUFGUSSGETRÄNKEN
SYSTEM FOR MAKING BEVERAGES BY INFUSING

(30) Priorité: 25.05.2010 FR 1054009
(43) Date de publication de la demande: 10.04.2013
(73) Titulaire: Compagnie Méditerranéenne des Cafés, 06510 Carros (FR)
(72) Inventeur: BLANC, Jean-Pierre, F-06000 Nice (FR); GOERING, Alain, F-06000 Nice (FR)
(74) Mandataire: Hautier, Nicolas
(86) Numéro de dépôt international: PCT/EP2011/058390
(87) Numéro de publication internationale: WO 2011/147792

(56) Documents cités:
- EP-A1- 1 510 160
- EP-A1- 1 510 160
- EP-A1- 1 859 713
- WO-A1-2008/142040
- US-A1- 2005 106 288

## Description

La présente invention concerne un dispositif de production de boissons par infusion d'un produit sous forme de dose.

Elle trouve plus particulièrement son application dans le domaine des machines à café de type EXPRESSO. Elle pourra également s'appliquer à la production de boissons à partir d'autres matières telles que le thé.

De nombreuses machines à café utilisent désormais des doses qui forment un ensemble relativement compact de produit à infuser.

De manière générale, le machines de préparation de boisson comprennent une chambre d'infusion destinée à recevoir de l'eau chaude et une dose de produit à infuser. La fiabilité de l'insertion de la dose et de son retrait hors de la chambre d'infusion posent de nombreuses difficultés.

Le document WO2008142040 propose une machine dont la fiabilité est particulièrement élevée. Cette fiabilité élevée résulte essentiellement d'un fonctionnement séquentiel de la machine reposant sur un nombre de pièces et une cinématique bien spécifiques.

Cette machine offre un résultat globalement satisfaisant. Néanmoins, dans un contexte où les consommateurs recherchent une qualité gustative constante et toujours plus élevée, il serait souhaitable d'améliorer la répétitivité et la qualité de la boisson obtenue tout en offrant une grande fiabilité d'utilisation.

L'invention a pour objectif d'atteindre l'un au moins de ces objectifs. A cet effet, on prévoit selon l'invention un système de production de boisson par infusion d'une dose d'un produit à infuser comprenant :
- une chambre d'infusion destinée à recevoir une dose, la chambre étant définie par au moins une première et une deuxième portions de chambre, les portions étant agencées pour être mutuellement éloignées ou rapprochées afin de respectivement fermer ou ouvrir la chambre,
- un actionneur agencé pour commander la fermeture de la chambre, une première portion de chambre étant solidaire de l'actionneur, l'actionneur étant un vérin hydraulique et la deuxième portion de chambre étant fixe,
- des moyens d'alimentation de la chambre
- un dispositif de fermeture comprenant des moyens de fermeture amont agencés de manière à sélectivement empêcher ou à autoriser l'entrée de la dose dans la chambre,
- le dispositif de fermeture étant agencé pour passer alternativement :
   ○ d'une première position dans laquelle les moyens de fermeture amont empêchent l'entrée de la dose dans la chambre,
   ○ à une deuxième position dans laquelle les moyens de fermeture amont autorisent l'entrée de la dose dans la chambre,
- le système comprend au moins un conduit d'alimentation conformé pour alimenter la chambre en fluide à infuser.

De manière caractéristique, la première portion de chambre, solidaire de l'actionneur, comporte en partie au moins ledit conduit d'alimentation.

Ainsi, le conduit d'alimentation de la chambre en fluide et l'actionneur de la chambre sont répartis du même côté de la chambre d'infusion. La deuxième portion n'est pas associée à un actionneur ou une alimentation en fluide. Elle peut être liée uniquement au bâti. La dimension du système séparant la chambre d'infusion d'une face avant de la machine peut ainsi être significativement réduite.

Le chemin que le fluide infusé parcourt en sortie de chambre d'infusion avant d'atteindre une tasse disposée au niveau de la face avant de la machine est alors également réduit.

Or, au cours du développement de la présente invention, il s'est avéré que la distance séparant la chambre d'infusion de la tasse impacte suffisamment la température du fluide infusé pour modifier la qualité de la boisson obtenue. Notamment il s'est avéré qu'une longue distance a tendance à casser la mousse se formant habituellement à la surface d'un café. En outre, cette distance rend délicat le contrôle de la température de la boisson à son arrivée dans la tasse. Or, la perception gustative d'une boisson infusée, telle que le café dépend largement de la température lors de la dégustation.

La présente invention prévoit donc une structure qui permet de mieux contrôler la qualité de la boisson obtenue tout en offrant une grande fiabilité de fonctionnement.

De plus, la longueur du conduit entre la chambre et la tasse augmente les transferts thermiques entre la boisson et la machine. Plus le conduit est froid plus ces transferts thermiques sont élevés. Or, lorsque plusieurs cafés sont effectués dans un intervalle de temps court le conduit chauffe, réduisant de ce fait les transferts thermiques. Les transferts thermiques varient donc fortement en fonction de l'utilisation de la machine ce qui empêche une bonne répétitivité de la qualité de la boisson obtenue. En réduisant la longueur du conduit d'évacuation, l'invention permet donc de réduire les transferts thermiques et contribue par conséquent à améliorer la répétitivité de la qualité de la boisson obtenue sans amoindrir la fiabilité du fonctionnement.

L'invention comprend en outre les caractéristiques suivantes :
- L'autre demi chambre, celle ne portant pas ledit conduit d'alimentation est fixe. Elle est fixe par rapport à un bâti de la machine. La cinématique de la machine est ainsi grandement simplifiée, fiable et robuste. En outre, l'actionnement de la chambre ainsi que le dispositif de fermeture sont logés dans un espace réduit.
- le dispositif de fermeture comprend des moyens de fermeture aval agencés de manière à sélectivement empêcher ou à autoriser la sortie de la dose hors de la chambre.
- Dans la première position, le dispositif de fermeture est agencé de sorte que les moyens de fermeture aval autorisent la sortie de la dose hors de la chambre.
- Dans la deuxième position, le dispositif de fermeture est agencé de sorte les moyens de fermeture aval permettent la réception de la dose introduite dans la chambre et empêchent la sortie de cette dernière hors de la chambre.
- Le dispositif de fermeture est agencé de manière à ce que la position des moyens de fermeture amont conditionne la position des moyens de fermeture aval.
- Le dispositif de fermeture est agencé de manière à ce que la position des moyens de fermeture aval conditionne la position des moyens de fermeture amont,
- le conduit d'alimentation est connecté à un dispositif d'alimentation comprenant une chaudière située en amont de la chambre d'infusion. Avantageusement, il comprend également une pompe située en amont de la chaudière.
   De manière facultative, l'invention comprend en outre au moins l'une quelconque des caractéristiques suivantes :
- les moyens de fermeture amont et les moyens de fermeture aval sont solidaires. La cinématique du système est ainsi simplifiée et le système est rendu plus robuste et fiable. En particulier, les risques de mauvais positionnement des moyens de fermeture amont par rapport aux moyens de fermeture aval sont réduits. De préférence, le dispositif de fermeture est distinct des première et deuxième portions de chambre. Il constitue une unique pièce portant les moyens de fermeture amont et les moyens de fermeture aval.
- Le système est configuré de sorte que le dispositif de fermeture est apte à translater selon une direction principale et dans lequel les moyens de fermeture amont et aval sont disposés de manière à présenter un décalage mutuel selon ladite direction principale.
- le dispositif de fermeture comprend un organe de guidage agencé de manière à guider le dispositif de fermeture dans son déplacement alternatif en translation entre la première et la deuxième position. Cette caractéristique permet d'améliorer encore la robustesse et la fiabilité du système.
- le dispositif de fermeture est configuré pour translater suivant un axe de déplacement et comprend une paire de butée réparties de chaque côté dudit axe de déplacement, chaque paire de butées étant configurée pour coopérer avec un doigt d'entraînement de sorte que le déplacement longitudinal du doigt d'entraînement entraîne le dispositif de fermeture en translation.
- l'actionneur comprend une pompe configurée pour actionner le vérin et pour alimenter la chaudière.
- le vérin et le conduit d'alimentation sont disposés du même côté de la chambre d'infusion.
- le vérin comprend un piston et un cylindre définissant avec le piston une chambre de poussée et des moyens de rappel et est agencé de sorte que l'introduction d'un fluide sous pression dans la chambre de poussée provoque le déploiement du vérin et de sorte que les moyens de rappel tendent à rétracter le piston.
- le piston comporte un passage en communication fluidique avec le conduit d'alimentation de la première portion d'une part et avec un canal d'alimentation d'autre part destiné à être connecté à une chaudière.
- le cylindre comporte des moyens d'emmanchement solidaires du cylindre, s'étendant dans la chambre de poussée et conformés pour coulisser à l'intérieur du piston et logeant le canal d'alimentation. Ainsi, le canal d'alimentation est un pratiqué dans les moyens d'emmanchement.
- avantageusement, les moyens d'emmanchement et le passage présentent des formes complémentaires de sorte que les moyens d'emmanchement coulissent à l'intérieur du passage pour assurer en partie au moins le guidage du piston. De préférence, les moyens d'emmanchement sont formés par un arbre. De joints sont prévus sur l'arbre et/ou à l'intérieur du passage pour assurer l'étanchéité de fluidique entre le passage et la chambre de poussée.
- dans lequel le cylindre comprend un fond faisant face au piston et des parois longitudinales s'étendant depuis le fond pour définir avec le piston la chambre de poussée et dans lequel les parois transversales sont conformées pour guider au moins en partie le piston.
- la deuxième portion de chambre comporte un conduit d'évacuation agencé pour conduire la boisson infusée hors du système vers un espace de récupération de boisson infusée. Typiquement, l'espace de récupération est configuré pour accueillir une tasse.
- le système comprend une face de réception configurée pour recevoir un récipient pour récupérer la boisson infusée, la deuxième portion étant disposée entre la chambre d'infusion et la face de réception. De préférence, la chambre d'infusion comporte deux portions de chambre, la première étant mobile et la deuxième étant fixe. La deuxième portion de chambre est solidaire d'un bâti du système. La deuxième portion de chambre est réalisée dans un matériau thermiquement isolant, de préférence en plastique.
- les moyens de fermeture amont sont solidaires des moyens de fermeture aval.
- le système comprend des moyens de guidage agencés de manière à guider la dose en vue de son introduction dans la chambre et à le maintenir au droit de la chambre lors de l'effacement des moyens de fermeture amont, les moyens de guidage étant solidaires du bâti de la machine. Ainsi, avec le système selon l'invention les moyens de guidage ne sont pas mobiles. La complexité du système est réduite ce qui améliore encore la fiabilité du système. Cette simplification tend également à réduire les coûts de fabrication et de maintenance.
- le système comprend une trappe définissant une ouverture disposée en amont des moyens de fermeture amont et dans lequel le dispositif de fermeture comprend des moyens d'obstruction agencés de manière à:
   - laisser libre l'ouverture de la trappe lorsque le dispositif de fermeture est disposé dans la première position et à,
   - obstruer l'ouverture de la trappe lorsque le dispositif de fermeture est disposé dans la deuxième position.

Selon un autre objet de l'invention, on prévoit une machine de production de boisson comprenant un système selon l'invention.

D'autres caractéristiques, buts et avantages de la présente invention apparaîtront à la lecture de la description détaillée qui va suivre et au regard des dessins annexés donnés à titre d'exemple non limitatif et sur lesquels :
- les figures 1 à 10 sont des vues en coupe longitudinale du système de la figure 1 représentant diverses phases du procédé de production lors du fonctionnement,
- les figures 11 et 12 sont des vues en perspective respectivement de face et de dos d'une bague formant moyens de fermeture selon un exemple particulier de l'invention,
- les figure 13 et 14 représente le coulissement de la bague illustrée en figure 11 et 12 sur des moyens de guidage.

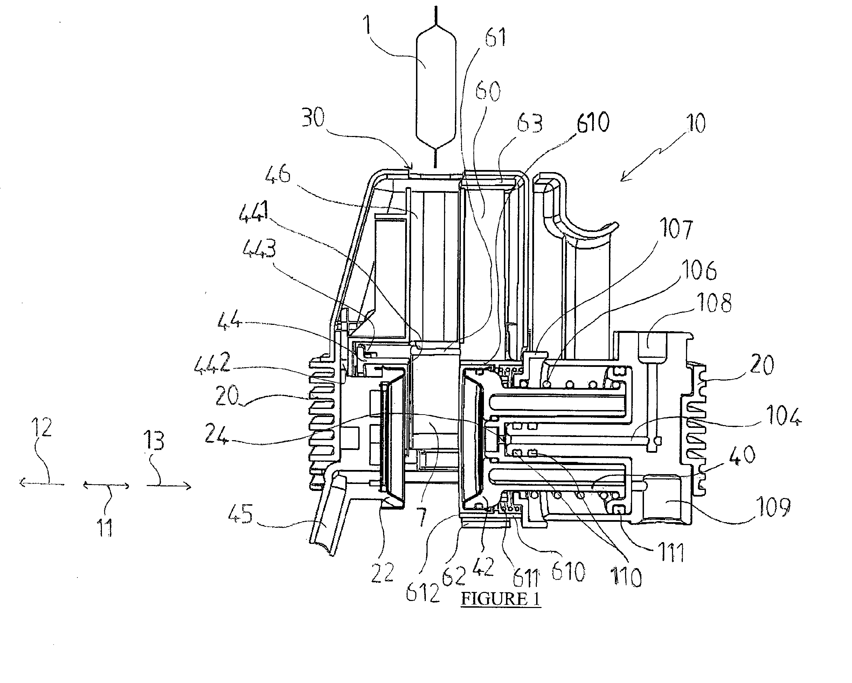

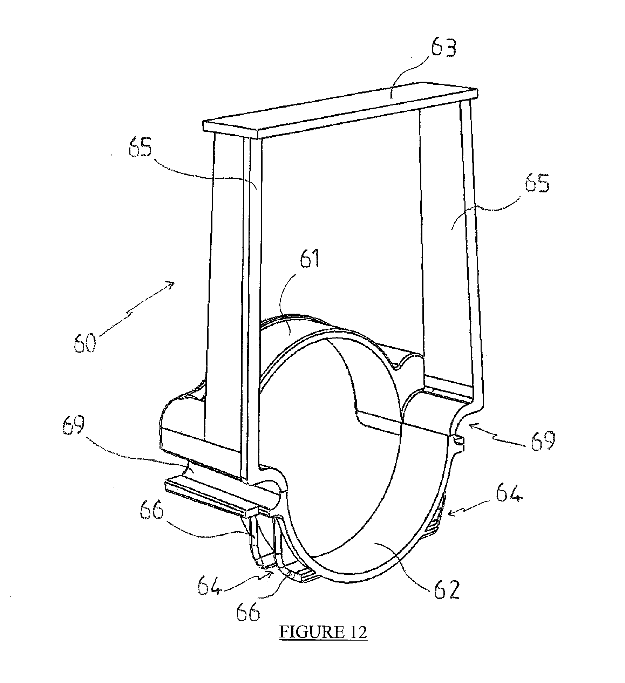

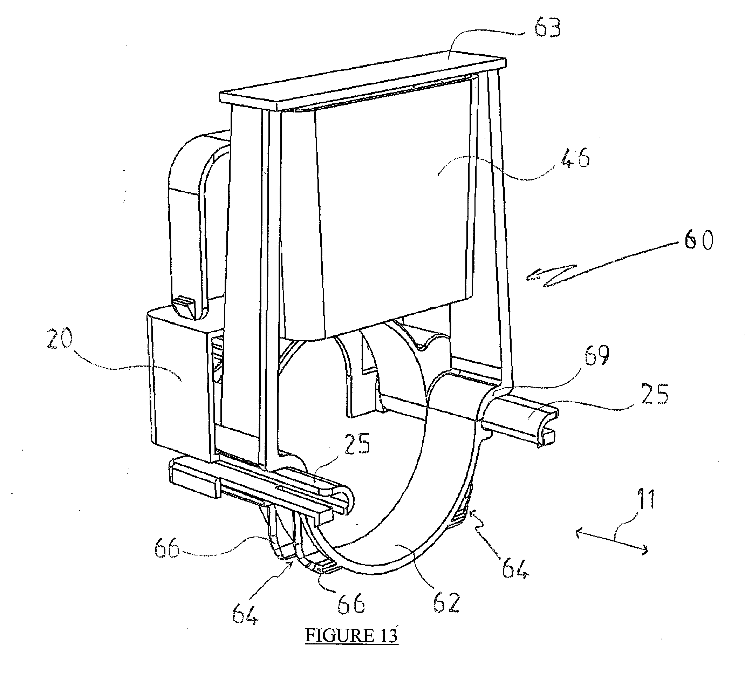

En référence aux figures 1 à 14, on a illustré un système 10 de préparation de boisson selon l'invention.

On qualifiera d'amont et d'aval les portions d'espace respectivement disposées avant et après un point considéré relativement au trajet normal d'une dose 1 dans la machine lors d'un cycle de préparation d'une boisson.

Dans le cadre de la présente invention, on peut utiliser des doses du type présentées sur les figures 1 à 10 et décrits dans le document WOA9507041 bien que cet exemple ne soit pas limitatif. Sur ces figures, le produit infusé, par exemple la mouture de café, est enfermée dans un volume intérieur de la dose constituée par l'assemblage de couches jointes par leurs périphéries au niveau d'un pourtour. Avantageusement, la présente invention est utilisable avec des types variés de doses. Elle n'implique notamment pas que le pourtour de la dose 1 soit rigide. De manière plus générale, l'invention s'applique quel que soit le type de dose. Elle s'applique aux doses présentant une enveloppe extérieure souple ou rigide de type capsule. Elle s'applique également aux doses dont l'enveloppe extérieure est apte à disparaître au moins en partie lors de l'infusion, par dissolution par exemple. Elle s'applique encore aux doses formées d'un produit à infuser agrégé par un liant et/ou par l'application d'une pression. Une telle dose formée d'un agrégat de produit à infuser tel que le café peut être constituée en dehors de la machine ou être constituée par un module dédié de la machine.

Le système 10 selon l'invention comporte une chambre 7 d'infusion destinée à recevoir une dose 1. La chambre 7 comprend deux portions de chambres agencées pour être mutuellement éloignées ou rapprochées par un actionneur afin de respectivement fermer ou ouvrir la chambre 7 d'infusion.

On désignera par demi chambres des pièces aptes à être disposées en contact mutuel ou au contact d'une dose 1 pour former un volume étanche faisant office de chambre 7 d'infusion. L'invention n'implique en aucune manière que les deux portions de chambre présentent mutuellement une quelconque symétrie.

Dans l'exemple de réalisation présenté, l'une des portions de chambre, désignée première portion de chambre 42 ou portion mobile, est portée par un actionneur autorisant le rapprochement et l'éloignement mutuels des portions de chambre. L'autre portion de chambre, désignée par la suite deuxième portion de chambre ou portion fixe 22, est solidaire d'un bâti 20 de la machine. Chacune des portions de chambre présente une extrémité définissant un pourtour contenu dans un plan sensiblement perpendiculaire à l'axe longitudinal 11.

On désignera par la suite axe longitudinale 11 ou direction longitudinal 11 la direction comprenant la direction principale de l'actionneur 40. On qualifiera de sens avant 12 le sens, selon cet axe 11 contribuant au rapprochement mutuel des deux portions de chambre et on qualifiera de sens arrière 13, le sens selon cet axe 11 permettant un éloignement mutuel des deux portions de chambre. La direction longitudinale 11, le sens avant 12 et le sens arrière 13 sont représentés en figure 1.

Dans le cadre de l'exemple de réalisation représenté, la première portion de chambre 42 présente un conduit d'alimentation 24 connecté à des moyens d'alimentation en fluide à infuser, typiquement de l'eau chaude. De manière conventionnelle, les moyens d'alimentation forment un circuit d'eau chaude comportant un réservoir, une chaudière permettant d'augmenter la température de l'eau du réservoir jusqu'à une température souhaitée en vue de son infusion dans la chambre 7, ainsi qu'une pompe permettant d'élever la pression de l'eau dans le circuit. Lors de l'infusion, les deux portions de chambre 42, 22 sont maintenues fermement au contact l'une de l'autre et délimitent un volume étanche de réception de la dose 1. L'étanchéité peut être réalisée par application des pourtours des deux portions de chambre sur le pourtour de la dose 1 qui fait alors office de joint. L'étanchéité peut également être assurée ou être renforcée des moyens d'étanchéité rapportés.

La deuxième portion de chambre 22 comporte un conduit d'évacuation 45 de boisson en communication fluidique d'une part avec l'intérieur de la chambre 7 d'infusion et avec une sortie de boisson d'autre part. Ce conduit d'évacuation 45 est destiné à assurer l'évacuation de la boisson résultant de l'infusion de la dose 1, vers un contenant tel qu'une tasse à café.

Après infusion, lorsque la première portion de chambre 42 est éloignée de la deuxième portion de chambre 22, la chambre 7 d'infusion est ouverte, la dose 1 déjà infusée n'est alors plus enserrée dans la chambre 7. Cette dose 1 est évacuée de la chambre 7 par gravité et tombe dans un bac de récupération.

De manière particulièrement avantageuse, le système est configuré de sorte que les moyens d'alimentation en fluide de la chambre 7 et l'actionneur de la chambre 7 sont disposés du même côté de la chambre 7. De manière encore plus avantageuse, les moyens d'alimentation et l'actionneur sont disposés en arrière de la chambre 7.

Ainsi, aucun organe d'alimentation de la chambre ou d'actionnement ne doit être disposé en avant de la deuxième portion 22. La face avant de la deuxième portion 22 est solidaire du bâti. La deuxième portion 22 peut ainsi être positionnée au plus près d'une face avant d'une machine équipée du système selon l'invention. On désigne par face avant une face depuis laquelle l'utilisateur est destiné à interagir avec la machine pour préparer une boisson. Typiquement, la face avant comporte un espace de récupération de la boisson infusée. Cet espace de récupération, non représenté, est par exemple un plan de pose d'une tasse.

La distance entre la chambre 7 et la face avant de la machine étant réduite, le conduit d'évacuation 45 peut également être limité. En particulier l'invention permet de se passer d'un long conduit d'évacuation ou d'une goulotte de rallonge habituellement nécessaire à l'amenée de la boisson infusée jusque dans une tasse. Un long conduit d'évacuation ou une goulotte de rallonge sont habituellement nécessaires pour que l'utilisateur voit sa tasse sans qu'une partie de la machine ne la masque. Ce positionnement de la tasse suffisamment en avant de la machine est en pratique nécessaire afin de bien positionner la tasse, de contrôler le niveau de remplissage et d'apprécier l'écoulement de la boisson.

En raccourcissant la distance entre la chambre d'infusion et la face avant de la machine, l'invention permet de raccourcir la distance séparant la tasse de la chambre 7. Les pertes thermiques lors de l'acheminement de la boisson sont donc réduites, améliorant de ce fait la qualité de la boisson obtenue.

En outre, la répétitivité de la qualité est améliorée puisque les pertes lors de l'acheminement de la boisson ne différents que légèrement selon l'utilisation de la machine.

De plus, l'encombrement de la machine est réduit.

L'actionneur entraînant la première portion de chambre est un vérin 40. Le vérin comprend un piston. La première portion 42 de chambre est portée par le piston du vérin 40. Le cylindre de vérin comporte un fond 102 faisant face à la surface de poussée 101 du piston. Le fond 102 du vérin 40, ses parois longitudinales et la surface de poussée 101 définissent une chambre de poussée 100. Cette chambre de poussée 100 est connectée à une entrée de fluide de poussée 109 destinée à être connectée à la pompe. L'activation de la pompe provoque la mise sous pression de la chambre de pression 100 ce qui entraîne le déplacement du piston vers l'avant 12 et son éloignement par rapport au fond 102 du cylindre.

Le système comprend des moyens de rappel du vérin 40. Ces moyens comprennent un ressort de rappel 106 configuré pour assurer le retour vers l'arrière 13 du piston en position rétractée lorsque la pression baisse dans la chambre de poussée 100. Le ressort 106 travaille en compression et s'étend longitudinalement. De préférence, il est cylindrique est entoure le piston. Il prend appui en amont sur le piston et en aval sur une butée 107 solidaire du bâti.

Le cylindre comporte des moyens d'emmanchement 103 formant saillie depuis le fond 102 et s'étendant en direction du piston. Le piston comporte un logement s'étendant depuis la surface de poussée 101. Le logement et les moyens d'emmanchement 103 sont conformés de sorte que les moyens d'emmanchement 103 pénètrent en profondeur dans le logement lors du retour du vérin 40 en position rétractée. Quelle que soit la position du piston, l'extrémité aval des moyens d'emmanchement 103 est insérée dans le logement du piston. Des joints 110 disposés entre les moyens d'emmanchement 103 et piston assurent en permanence l'étanchéité du passage 105.

Les moyens d'emmanchement 103 comportent un canal d'alimentation 104 intérieur. Une extrémité amont du canal 104 est fluidiquement reliée à une entrée de fluide 108 connectée à la chaudière. Une extrémité aval débouche dans un passage 105 formé par le logement. Ce passage 105 débouche en aval dans le conduit d'alimentation 24 porté par la première portion de chambre 42 et alimentant la chambre 7.

Ainsi, lors du déploiement du vérin 40, le piston s'éloigne du fond 102 du cylindre et le passage 105 s'agrandit. Inversement, lors de la rétractation du vérin 40, le passage 105 se raccourcit. Quelle que soit la position du piston, la chambre 7 est toujours en communication fluidique avec le canal d'alimentation 104.

Avantageusement ces moyens d'emmanchement 103 participent au guidage du piston. De manière préférée, le guidage du piston est également assuré par une coopération entre les parois longitudinales du cylindre et le piston. Au moins un joint 111 est disposé entre les parois longitudinales du cylindre et le piston pour assurer l'étanchéité de la chambre de poussée 100.

De préférence, les moyens d'emmanchement 103 définissent un arbre passant par le centre du cylindre.

Le système 10 comporte également un dispositif de fermeture 60. Ce dispositif de fermeture 60 comporte des moyens de fermeture aval 62 ainsi que des moyens de fermeture amont 61. Il est distinct de chacune des portions de chambre 22, 42 formant la chambre 7 d'infusion.

Les moyens de fermeture aval 62 sont disposés en aval de la chambre 7 d'infusion. Ils sont agencés de manière à faire office de butée d'arrêt escamotable pour une dose 1 introduite dans la chambre 7.

Dans une position non escamotée les moyens de fermeture aval 62 assurent la réception d'une dose 1 introduite dans la chambre 7 alors que celle-ci est ouverte, et empêchent l'éjection par gravité de cette dose 1 vers l'aval de la chambre 7.

Dans cette position les moyens de fermeture aval 62 interdisent également toute intrusion dans la chambre 7 depuis l'aval de cette dernière. Ainsi l'utilisateur ne peut pas, par exemple, introduire ses doigts dans la chambre 7.

Dans une position escamotée, les moyens de fermeture aval 62 ne forment pas une butée d'arrêt pour une dose 1 introduite dans la chambre 7 et permettent donc l'évacuation d'une dose 1 lors de l'ouverture de la chambre 7.

Les moyens de fermeture amont 61 sont agencés de manière à faire office de butée d'arrêt escamotable. Ils sont disposés en amont de la chambre 7 d'infusion.

Dans une position non escamotée les moyens de fermeture amont 61 empêchent l'accès d'une dose 1 ou de tout autre élément dans la chambre 7 d'infusion depuis l'amont de cette dernière. Dans cette position non escamotée les moyens de fermeture amont 61 assurent également la réception et participent au maintien en position d'une dose 1 introduite dans le système 10.

En position escamotée les moyens de fermeture amont 61 autorisent l'introduction d'une dose 1 dans la chambre 7 depuis l'amont de cette dernière.

Le système 10 est agencé de manière à faire passer le dispositif de fermeture 60 alternativement d'une première position dans laquelle les moyens de fermeture amont 61 empêchent l'entrée d'une dose 1 dans la chambre 7, et les moyens de fermeture aval 62 assurent qu'aucune dose 1 usagée ne demeure présent dans la chambre 7, à une deuxième position dans laquelle les moyens de fermeture amont 61 autorisent l'entrée d'une dose 1 dans la chambre 7 et les moyens de fermeture aval 62 permettent la réception et le maintien d'une dose 1 dans la chambre 7.

Le dispositif de fermeture 60 est agencé de manière à ce que la position des moyens de fermeture amont 61 conditionne la position des moyens de fermeture aval 62, et à ce que la position des moyens de fermeture aval 62 conditionne la position des moyens de fermeture amont 61.

Ainsi, pour une position donnée des moyens de fermeture amont 61, les moyens de fermeture aval 62 n'admettent qu'une seule position et inversement. Le système présente donc un fonctionnement séquentiel.

Ainsi, l'invention permet de réduire significativement les risques de blocage du système notamment dus au coincement de la dose entre des organes mécaniques. Le nombre d'interventions que doit effectuer un utilisateur ou un réparateur est par conséquent réduit. Elle contribue également à préserver l'intégrité de la dose 1. Par ailleurs, elle empêche qu'une dose introduite dans la machine ne tombe directement dans le bac de récupération sans avoir été au préalable réceptionné au niveau de la chambre de fusion.

Les moyens de fermeture amont 61 et les moyens de fermeture aval 62 sont solidaires. Cette caractéristique contribue à simplifier la cinématique, à améliorer la robustesse et à limiter le coût de revient et le taux de défectuosité du système 10. Le dispositif de fermeture 60 formant une seule pièce définit ainsi une bague.

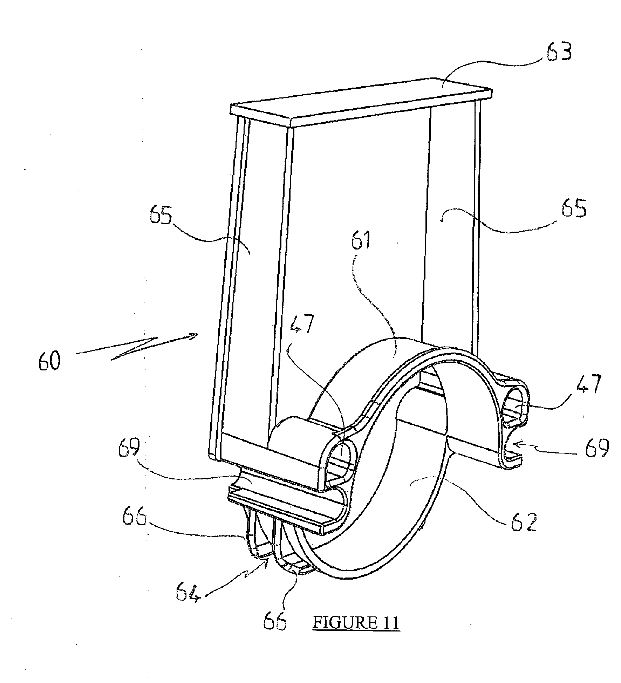

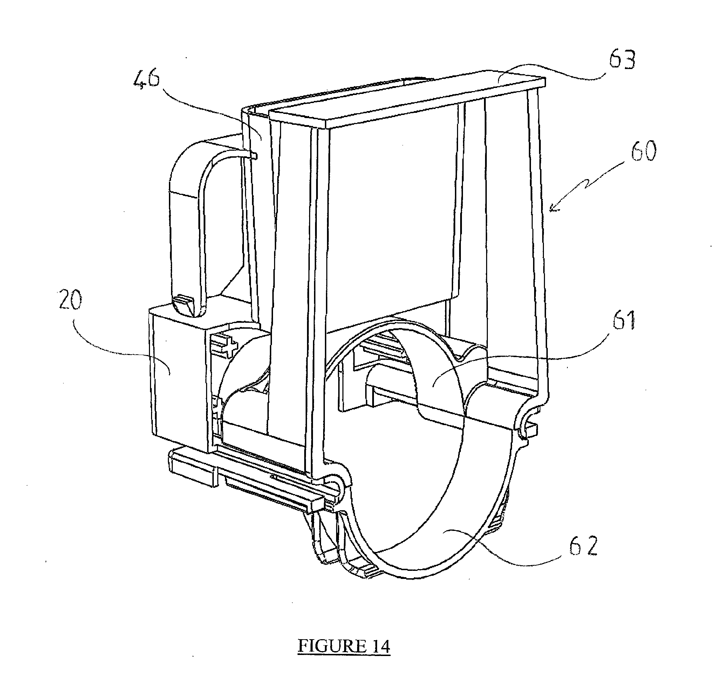

Les figures 11 et 14 laisse apparaître en détail le dispositif de fermeture 60 selon cet exemple de réalisation. Ce dispositif de fermeture 60 comprend :
- un organe de guidage agencés de manière à guider le dispositif de fermeture 60 dans son déplacement alternatif entre la première et la deuxième position. De préférence, l'organe de guidage comprend deux coulisseaux 69 aptes à assurer le guidage en translation du dispositif de fermeture 60 le long de deux arbres 25, 25 portés par le bâti 20 du système 10 et s'étendant selon deux axes de guidage parallèles à l'axe longitudinal 11,
- deux bras 65, 65 s'étendant chacun depuis un coulisseau 69 respectif et dans une direction sensiblement perpendiculaire à l'axe de guidage,
- des moyens de fermeture amont 61 agencés de manière à faire office de butée d'arrêt pour une dose 1 en amont de la chambre 7 lorsque le dispositif de fermeture 60 est disposé dans la première position. De manière avantageuse, les moyens de fermeture amont 61 présentent une forme de portion de couronne dont chacune des extrémités joint l'un des bras 65, 65 et qui est centrée sur un axe parallèle aux axes de guidage,
- des moyens de fermeture aval 62 agencés de manière à faire office de butée d'arrêt pour une dose 1 en aval de la chambre 7 lorsque le dispositif de fermeture 60 est disposé dans la deuxième position. De manière avantageuse, les moyens de fermeture aval 62 présentent une forme de portion de couronne dont chacune des extrémités joint l'un des deux bras 65, 65 et qui est centré sur un axe parallèle aux axes de guidage.

Par ailleurs, les moyens de fermeture amont 61 et aval 62 sont disposés de manière à présenter un décalage mutuel selon la direction principale de déplacement du dispositif de fermeture 60. Ainsi, dans la deuxième position les moyens de fermeture amont 61 sont disposés sensiblement en avant de la deuxième portion de chambre 22 et les moyens de fermeture aval 62 sont disposés sensiblement en arrière de la deuxième portion de chambre 22. Dans la première position les moyens de fermeture amont 61 et les moyens de fermeture aval 62 sont disposés sensiblement en arrière de la deuxième portion de chambre 22.

Les dimensions de ce décalage sont choisies de manière à ce que :
- lorsque le dispositif de fermeture 60 est disposé dans la première position, les moyens de fermeture amont 61 empêchent l'entrée d'une dose 1 dans la chambre 7, et les moyens de fermeture aval 62 autorisent la sortie d'une dose 1 usagée hors de la chambre 7,
- lorsque le dispositif de fermeture 60 est disposé dans la deuxième position les moyens de fermeture amont 61 autorisent l'entrée d'une dose 1 dans la chambre 7, les moyens de fermeture aval 62 permettent la réception et le maintien d'une dose 1 introduite dans la chambre 7.

Ainsi dans cet exemple le dispositif de fermeture 60 étant monté coulissant sur l'axe longitudinal 11, les moyens de fermeture amont 61 et aval 62 présentent un décalage mutuel selon l'axe longitudinal 11. Les moyens de fermeture amont 61 sont disposés en avant des moyens de fermeture aval 62 selon ce même axe.

Le système 10 comporte des moyens d'actionnement permettant le passage alternatif de la première à la deuxième position. Ce sont les mêmes moyens d'actionnement qui agissent à la fois sur les moyens de fermeture amont 61 et sur les moyens de fermeture aval 62.

Le système 10 permet par conséquent de limiter considérablement les risques de coincement des conditionnements. Notamment, le système 10 empêche :
- qu'une dose 1 introduite dans le système 10 ne tombe directement dans le bac de récupération sans avoir subi une infusion. En effet, la chambre 7 d'infusion est soit obstruée en amont par les moyens de fermeture amont 61 soit en aval par les moyens de fermeture aval 62.
- que deux conditionnements puissent être simultanément présents dans la chambre 7 d'infusion.

Le nombre d'actionneurs étant réduits, la complexité de la structure du système 10 s'en trouve significativement limitée. Cette structure permet une simplification de la cinématique des organes permettant de passer alternativement de la première à la deuxième position. L'encombrement et le nombre de pièces mises en jeu, le coût de fabrication ainsi que le taux de défectuosité sont par conséquent substantiellement réduits.

Au moins un ressort d'écartement, travaillant de préférence en compression, tend à pousser le dispositif de fermeture 60 vers la première portion 42 de chambre 7 et à rapprocher le dispositif de fermeture 60 de la tête du vérin 40. Le ressort d'écartement repousse donc le dispositif de fermeture 60 vers l'arrière 13.

De manière préférentielle, on dimensionnera le ressort d'écartement de manière à ce qu'un coincement de la dose 1 entre le dispositif de fermeture 60 et un autre élément du système 10 ne nuise pas à l'intégrité de la dose 1. Ainsi, on choisira par exemple un ressort exerçant sur le dispositif de fermeture 60 une force équivalente au poids de la dosette 1 additionné de celui du dispositif de fermeture 60 et majoré au minimum d'un tiers du total. L'effort d'écartement est ainsi compris entre 0.6 et 1,5 Newton.

Préférentiellement, le dispositif de fermeture comporte deux logements 47,47 configurés pour loger chacun un ressort d'écartement. Ces logements 47 apparaissent en figure 11. Le système est agencé de sorte que chaque ressort d'écartement prend appui d'une part sur un fond du logement 47 et d'autre part sur une paroi liée au bâti 20.

L'extrémité avant des arbres 25, 25 est liée au bâti 20.

Le déplacement vers l'avant du dispositif de fermeture 60 ainsi que l'enclenchement du déplacement du dispositif de fermeture 60 dans un sens ou dans l'autre seront décrits plus en détail par la suite.

Le dispositif de fermeture 60 est entraîné par un dispositif d'entraînement non illustré. Par exemple ce dispositif comprend au moins un doigt d'entraînement coopérant avec une butée 66 portée par le dispositif de fermeture 60.

De préférence, comme illustré en figures 11 à 14, le dispositif de fermeture 60 comprend une paire de butée 66, 66 réparties de chaque côté de l'axe de déplacement. Chaque paire de butées 66, 66 est configurée pour accueillir un doigt d'entraînement. Le déplacement longitudinal du doigt entraîne le dispositif de fermeture 60 en translation.

Le système 10 comporte également des moyens de guidage 46. Ces moyens de guidage 46 présentent sensiblement la forme d'un manchon complémentaire de la forme de la section de la dose 1. Ils sont configurés pour empêcher tout mouvement significatif de la dose 1 dans un plan horizontal, et à autoriser son déplacement vertical. Ils font office trémie. Ces moyens de guidage 46 sont solidaires du bâti 20. Ils sont donc fixes. De préférence, ils sont montés sur la deuxième portion 22 ou sur une pièce solidaire de cette dernière ou du bâti 20. Ils sont agencés de manière à assurer le guidage de la dose 1 en amont des moyens de fermeture amont 61. Par ailleurs, ils sont longitudinalement disposés de manière à être disposés au droit de l'ouverture de la chambre 7 dans la deuxième position afin d'autoriser l'introduction d'une dose 1 dans cette dernière lorsque les moyens de fermeture amont 61 sont escamotés. Plus précisément, ils sont positionnés au droit des moyens de fermeture aval 62 lorsque ces derniers sont dans la deuxième position. Ils guident ainsi la descente de la dose 1 jusque dans la chambre 7.

Par ailleurs, ils sont verticalement disposés de manière à être suffisamment proches des moyens de fermeture amont 61 pour assurer le maintien de la dose 1 lorsque cette dernière repose sur les moyens de fermeture amont 61. Ainsi, lorsqu'une dose 1 repose sur les moyens de fermeture amont 61 et que ces derniers translatent vers l'avant, les moyens de guidage 46 contribuent à empêcher toute translation longitudinale significative de la dose 1. Cette dernière est donc maintenue au regard de l'ouverture de la chambre 7 d'infusion lorsque les moyens de fermeture amont 61 sont totalement escamotés. Le mouvement relatif du dispositif de fermeture 60 et des moyens de guidage 46 permet ainsi le transfert de la dose 1 depuis les moyens de fermeture amont 61 à la chambre 7. Par ailleurs, ce mouvement relatif permet de protéger l'intégrité de la dose 1 lors de ce transfert. Ce guidage de la dose est clairement illustré en figures 1 à 4.

En prévoyant des moyens de guidage 46 fixes, l'invention contribue à renforcer la robustesse et la fiabilité du système tout en maintenant la caractère séquentiel du fonctionnement.

En outre, ces moyens de guidage 46 permettent de maintenir en position une dose 1 reposant sur les moyens de fermeture amont 61 de manière à faciliter la mise en place de cette dose 1 dans la chambre 7. Optionnellement, les moyens de guidage 46 présentent deux rainures sensiblement parallèles et verticales, destinées à coopérer avec le pourtour de la dose 1 afin d'améliorer le guidage de cette dernière.

Le système 10 comprend également une trappe 30 définissant une ouverture disposée en amont des moyens de fermeture amont 61 et en amont des moyens de guidage 46. L'ouverture de la trappe 30 est disposée longitudinalement de manière à être située au droit des moyens de guidage 46. Ils sont ainsi positionnés au droit des moyens de fermeture amont 61 lorsque le dispositif de fermeture 60 est disposé dans la première position. L'ouverture définit par la trappe 30 est accessible par un utilisateur et est destinée à recevoir une dose 1 pour son introduction dans le système 10.

Les moyens de guidage 46 étant fixes par rapport à la trappe 30, l'invention supprime tout risque de coincement d'une dose ou de tout autre objet tel qu'un doigt entre les moyens de guidage 46 et la trappe 30.

Le dispositif de fermeture 60 comporte des moyens d'obstruction 63 agencés de manière à :
- obstruer l'ouverture de la trappe 30 lorsque le dispositif de fermeture 60 est disposé dans la deuxième position,
- laisser libre l'ouverture de la trappe 30 lorsque le dispositif de fermeture 60 est disposé dans la première position.

Les moyens d'obstruction 63 comprennent une butée supérieure disposée en amont des moyens de fermeture amont 61, en amont des moyens de guidage 46 et en aval de l'ouverture de la trappe 30. La butée supérieure s'étend d'un bras 65 à l'autre du dispositif de fermeture 60 et fait office de butée d'arrêt escamotable pour une dose 1. Elle est disposée, selon l'axe longitudinal 11, sensiblement au droit des moyens de fermeture aval 62.

Ainsi, lorsque le dispositif de fermeture 60 est disposé dans la première position, la dose 1 introduite dans l'ouverture de la trappe 30 accède librement aux moyens de guidage 46 et arrive en butée sur les moyens de fermeture amont 61.

Lorsque le dispositif de fermeture 60 est disposé dans la deuxième position, l'introduction d'une dose 1 dans l'ouverture de la trappe 30 est stoppée en amont des moyens de guidage 46 par les moyens d'obstruction 63. Cette dose 1 n'accède donc ni aux moyens de fermeture amont 61 ni aux moyens de fermeture aval 62, ni à la chambre 7.

Les moyens d'obstruction 63 empêchent ainsi qu'une dose 1 ne soit introduite alors qu'un autre conditionnement 1 est déjà présent sur les moyens de fermeture amont 61 ou dans la chambre 7.

Par ailleurs, lorsque le dispositif de fermeture 60 est dans la deuxième position, les moyens d'obstruction 63 empêchent tout accès au système 10 d'infusion ce qui permet d'améliorer la sécurité de l'ensemble de la machine. En effet, dans cette position un utilisateur ne peut notamment introduire un objet ou ses doigts à l'intérieur du système 10.

Avantageusement, le dispositif de fermeture 60 est formé d'une pièce unique venue de matière. Le dispositif de fermeture 60 pourra par exemple être constitué en aluminium, en acier inoxydable ou encore en plastique.

Comme indiqué précédemment, le système 10 comporte une pompe destinée à alimenter la chambre 7 en fluide. Par ailleurs, cette pompe, dans l'exemple particulier décrit, alimente également l'actionneur permettant de fermer et d'ouvrir la chambre 7. En effet, la pompe alimente un circuit hydraulique d'actionnement du vérin 40.

La pompe est alimentée en électricité par un circuit électrique muni d'un premier et d'un deuxième interrupteur.

Le premier interrupteur se ferme sous la commande d'un utilisateur. Avantageusement, un bouton de commande est lié au premier interrupteur et son actionnement permet de fermer le premier interrupteur.

Le deuxième interrupteur se ferme lorsque le dispositif de fermeture 60 est disposé dans la deuxième position. De manière plus précise, le système 10 comporte des moyens d'asservissement agencés de manière à asservir le fonctionnement de la pompe en fonction de la position du dispositif de fermeture 60. Ces moyens d'asservissement font office de deuxième interrupteur et comportent un contacteur de fin de course solidaire du bâti 20, ainsi qu'un doigt de contact agencé de manière à coopérer avec le contacteur et porté par le dispositif de fermeture 60 ou, de préférence, porté par le dispositif d'entraînement du dispositif de fermeture 60. Dans ce dernier cas, une même pièce peut porter à la fois le doigt de contact et le doigt d'entraînement coopérant avec les butées 66. Les moyens d'asservissement sont agencés de manière à ce que le contacteur et le doigt de contact soient en contact mutuel lorsque le dispositif de fermeture 60 est disposé dans la deuxième position. Dans cette position, le doigt de contact appuie sur le contacteur et permet de fermer le circuit électrique d'alimentation de la pompe. Dans cette position, la pompe est alimentée en électricité et peut fonctionner. Lorsque le circuit est ouvert, c'est-à-dire lorsque le contacteur n'est pas poussé par le doigt de contact, la pompe ne peut fonctionner. Ainsi, le fonctionnement de la pompe est subordonné au positionnement adéquat des moyens de fermeture amont 61 et aval 62.

Ainsi, l'invention permet une bonne maîtrise de la position relative entre les moyens de fermeture amont 61, les moyens de fermeture aval 62, les moyens de guidage 46 et les deux portions de chambres 22, 42. Les risques de dysfonctionnement du système 1 sont par conséquent limités.

Plus précisément, le système 10 offre une sécurité élevée pour un utilisateur. En effet, si la trappe 30 n'est pas masquée par les moyens d'obstruction 63 et demeure ouverte du fait de la présence d'un obstacle quelconque tel notamment que des doigts, la pompe ne fonctionne pas et ni la translation du vérin 40, ni l'injection d'eau dans la chambre 7 ne peuvent être enclenchées. Le système présente donc un fonctionnement séquentiel et conditionnel.

Par ailleurs, les moyens d'asservissement permettent également d'interdire le fonctionnement de la pompe, lorsque la présence d'un obstacle en partie basse du système 10 empêche un positionnement correct du dispositif de fermeture 60. Ainsi, lorsque le bac de récupération est plein et qu'une dose 1 déjà infusée ne peut être évacué correctement et empêche le fonctionnement adéquat du dispositif de fermeture 60, la pompe ne peut fonctionner et des moyens d'alerte sont éventuellement activés. Il en est de même si un utilisateur insère des doigts à travers l'ouverture aval de la chambre. L'eau chaude n'est pas distribuée à la chambre et le vérin n'est pas actionné. Les risques de brûlure ou de coincement de doigts sont donc évités même en cas d'utilisation anormale du système.

En outre, l'invention permet de préserver l'intégrité d'une dose 1 qui serait présente dans la chambre 7 alors que le dispositif de fermeture 60 est bloqué. En effet, l'actionnement de la pompe aurait pour effet d'écraser la dose 1 et de l'humidifier.

Le système 10 comporte des premiers moyens de dévêtissement 610 agencés de manière à provoquer le décollement entre la dose 1 et la première portion 42 après infusion. En effet, le contact ferme entre la dose 1 et les deux demi chambres lors de l'infusion et le collage par effet ventouse de la surface humide de la dosette infusée peut empêcher que cette dose 1 soit éjectée par simple éloignement de la première portion 42 par rapport à la deuxième portion 22 et par retrait des moyens de fermeture aval 62. Ces premiers moyens de dévêtissement 610 présentent une forme générale d'arête s'étendant sensiblement selon une forme de couronne. Plus généralement, ces premiers moyens de dévêtissement 610 sont conformés pour s'appliquer sur une portion au moins de la dose 1. L'extrémité de l'arête définit un doigt de dévêtissement 612 conformé pour entrer au contact de la dose 1. Dans l'exemple illustré le doigt de dévêtissement 612 forme un cercle conformé pour s'appliquer sur la portion de pourtour de dose 1. Il est formé par un manchon monté sur le vérin avec une mobilité en translation selon l'axe de déplacement du vérin 40. Un ressort de dévêtissement 611 intercalé entre la bâti 20 ou le vérin 40 et le doigt de dévêtissement 612 tend à repousser ce dernier au-delà de l'extrémité avant de la première chambre 42. Ainsi, ces premiers moyens de dévêtissement 610 sont agencés de manière à entrer au contact du pourtour de la dose 1 et à déplacer cette dernière vers l'avant lors du retour vers l'arrière de la première portion 42. Avantageusement, le ressort de dévêtissement 611 prend appui sur une première face d'une butée 107 solidaire du bâti 20, une deuxième face de cette butée 107 servant de butée au ressort de rappel 106 tendant à rétracter le vérin 40.

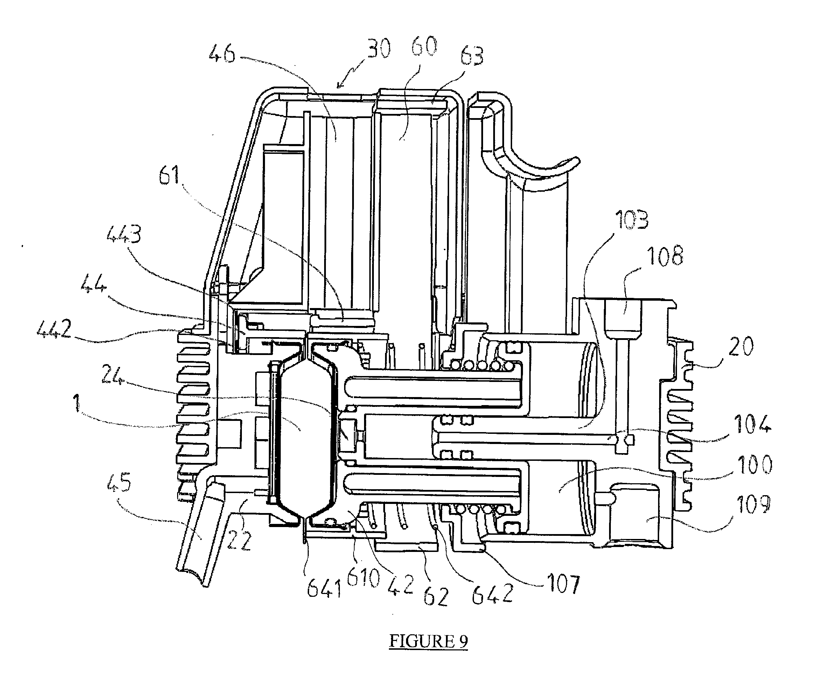

La figure 9 illustre les premiers moyens de dévêtissement 610 en position de dévêtissement, le doigt de dévêtissement 612 étant disposé en avant de la portion 42.

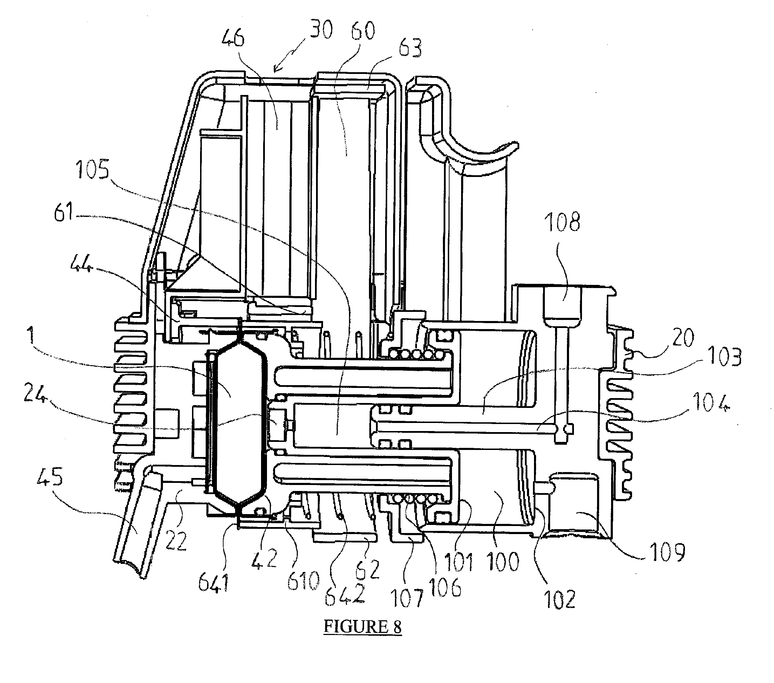

La figure 8 illustre les premiers moyens de dévêtissement 610 en position rétractée lorsque la chambre 7 est fermée. Dans cette position les premiers moyens de dévêtissement 610 prennent appui sur le pourtour de la dosette 1 ou en l'absence de celle-ci sur le bâti 20 ou, de préférence, sur des deuxièmes moyens de dévêtissement 44 détaillés ci-dessous.

Ces premiers moyens de dévêtissement 610 présentent une structure particulièrement simple et contribuent à améliorer significativement le fonctionnement du système 10.

Le système 10 comporte également des deuxièmes moyens de dévêtissement 44 agencés de manière à provoquer le décollement entre la deuxième portion 22 et la dose 1 après infusion. Ces deuxièmes moyens de dévêtissement 44 comprennent un doigt de dévêtissement 441 monté en coulissement longitudinal par rapport au bâti et deux ressorts de dévêtissement 442 installés symétriquement de part et d'autre de l'axe 11 et intercalé entre ledit doigt de dévêtissement 441 et une pièce liée au bâti 20 du système. Ces deuxièmes moyens de dévêtissement 44 sont agencés pour repousser le doit de dévêtissement 441 vers l'arrière au delà de l'extrémité arrière de la deuxième portion 22 de chambre d'infusion 7.

Le ressort de dévêtissement 442 agit en compression. Le doigt de dévêtissement 441 est défini par une portion de couronne entourant la deuxième portion 22. Lors de l'ouverture de la chambre 7, le doigt de dévêtissement 441 est repoussé vers l'arrière et entre au contact de la dose 1, provoquant le décollement de cette dernière hors de la deuxième portion 22 comme illustré en figure 9.

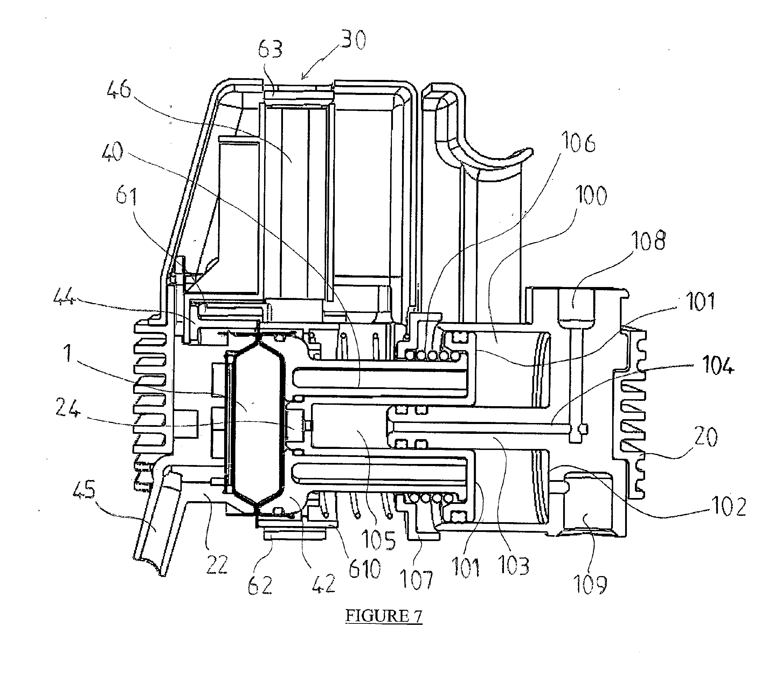

Avantageusement, les moyens de dévêtissement 441 comprennent une surface d'appui 443 tournée au regard des moyens de fermeture 30 et configurée pour être entraînée vers l'avant par le dispositif de fermeture 60 lorsque ce dernier parvient en deuxième position. Ainsi lors de la fermeture de la chambre 7, le dispositif de fermeture 60 provoque la compression du ressort de dévêtissement 442 et le retrait des deuxième moyens de dévêtissement 44. Cette phase est en particulier illustrée en figure 7 et 8.

Le ressort de dévêtissement 442 exerce sur la dose 1 un effort suffisamment faible pour ne pas endommager ce dernier en cas de coincement. Ce ressort est par exemple dimensionné de manière à exercer un effort de l'ordre de 0,2 Newton.

Pour chacun des moyens de dévêtissement 44, 660, on pourra remplacer le ressort par n'importe quel moyen élastique.

En référence aux figures 1 à 10 on va maintenant décrire un cycle de fonctionnement permettant de préparer une boisson.

En début de cycle, le vérin 40 est rétracté. La tête de vérin 40 est repoussée en arrière par le ressort de rappel 106 de vérin 40, la première portion 42 est alors éloignée de la deuxième portion 22 et la chambre 7 est donc dans sa position ouverte. Le dispositif de fermeture 60 est disposé dans la première position. Ainsi :
- les moyens de fermeture amont 61 empêchent l'accès à la chambre 7 d'infusion depuis la partie amont de cette dernière,
- les moyens de fermeture aval 62 permettent l'éjection par gravité d'une dose 1 déjà infusée et présent dans la chambre 7,
- les moyens d'obstruction 63 laissent libre l'ouverture de la trappe 30.

Par ailleurs, l'extrémité avant des premiers moyens de dévêtissement 610 est disposée en avant de l'extrémité avant de la première portion 42. L'extrémité arrière des deuxièmes moyens de dévêtissement 44 est disposée en arrière de l'extrémité arrière de la deuxième portion 22. Ainsi, aucune dose 1 déjà infusée ne se trouve entre les deux demi chambres. Cette phase est illustrée en figure 1.

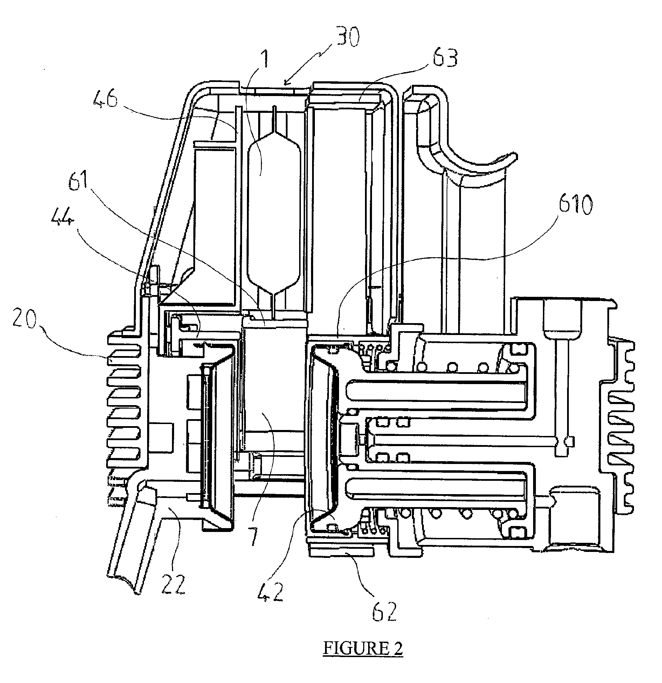

L'utilisateur introduit une dose 1 dans l'ouverture de la trappe 30. Cette dose 1 tombe par gravité en étant guidée et en étant maintenue en position sensiblement verticale par les moyens de guidage 46. Le déplacement par gravité de cette dose 1 est interrompu par les moyens de fermeture amont 61 disposés au regard de l'ouverture de la trappe 30 et des moyens de guidage 46. Ces moyens de fermeture amont 61 empêchent au conditionnement 1 d'accéder à l'intérieur de la chambre 7. Cette phase est illustrée en figure 2.

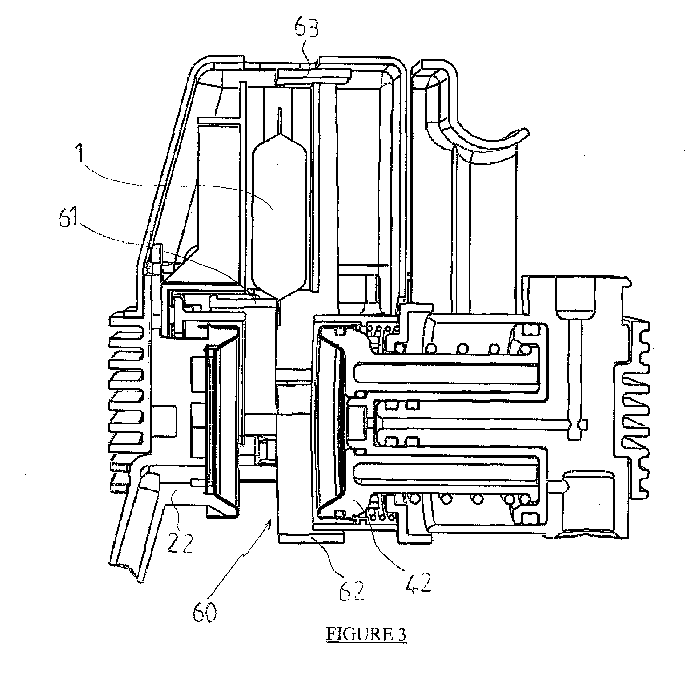

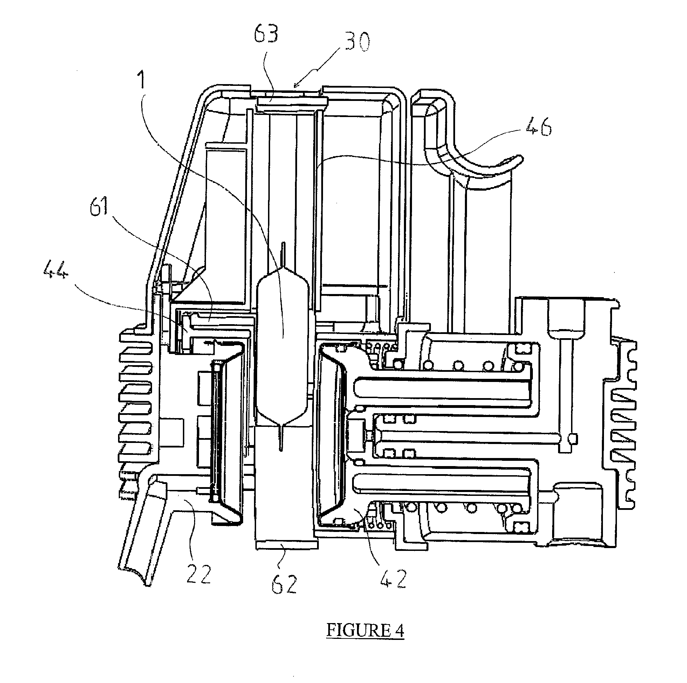

Dans une étape ultérieure illustrée en figure 3 et 4, l'utilisateur commande l'actionnement du dispositif de fermeture 60. Ce dernier est alors libre de coulisser vers l'avant sous l'effet du dispositif d'entraînement non représenté agissant sur les butées 66,66. Lors de ce déplacement, les moyens de fermeture amont 61 se déplacent vers l'avant et les moyens de guidage 46, fixés au bâti, maintiennent la dose 1 au droit de l'ouverture de la chambre 7. Au fur et à mesure de leur déplacement vers l'avant, les moyens de fermeture amont 61 libèrent l'ouverture de la chambre 7. Par ailleurs, les moyens de fermeture aval 62 obstruent progressivement l'ouverture de la chambre 7 en aval de cette dernière. Lorsque l'ouverture de la chambre 7, dégagée par les moyens de fermeture amont 61 est suffisamment importante, la dose 1 s'introduit par gravité dans la chambre 7 où elle est réceptionnée par les moyens de fermeture aval 62 formant une butée d'arrêt. Cette phase est illustrée en 4 et 5.

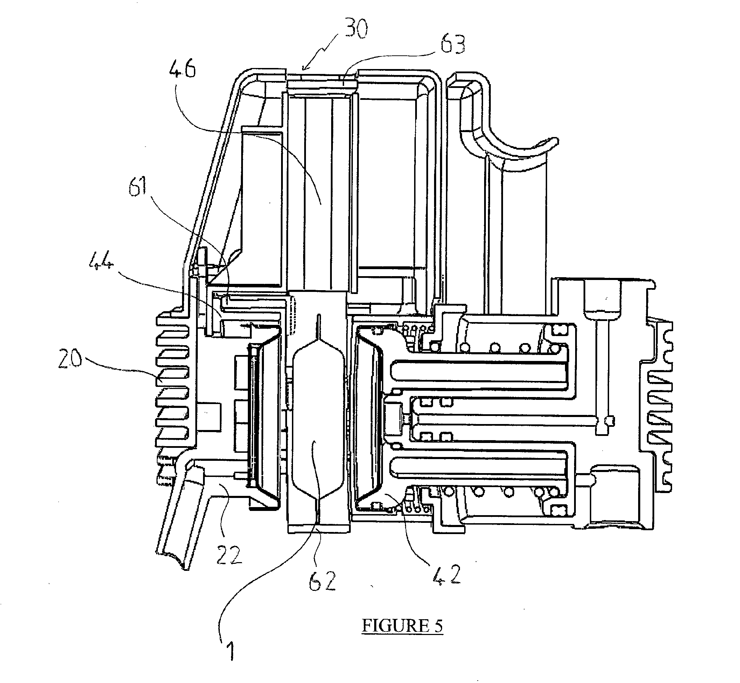

Le déplacement vers l'avant du dispositif de fermeture 60 se poursuit jusqu'à ce que ce dernier entre en butée avec un élément du bâti 20.. De préférence, le dispositif de fermeture 60 entre en butée avec les deuxième moyens de dévêtissement 44, qui, en se retirant vers l'avant, entrent eux-mêmes en butée avec le bâti 20. Cette phase est illustrée plus particulièrement en figure 5. Dans cette position le dispositif de fermeture 60 est disposé dans la deuxième position. Dans cette position :
- les moyens de fermeture amont 61 permettent l'accès à la chambre 7 d'infusion depuis l'amont de cette dernière,
- les moyens de fermeture aval 62 assurent la réception de la dose 1 introduit dans la chambre 7,
- les moyens d'obstruction 63 obstruent l'ouverture de la trappe 30 empêchant ainsi l'introduction de conditionnements ou de tout autre objet à travers cette dernière,
- le contacteur est au contact du doigt de contact et les moyens d'asservissement permettent le fonctionnement de la pompe.

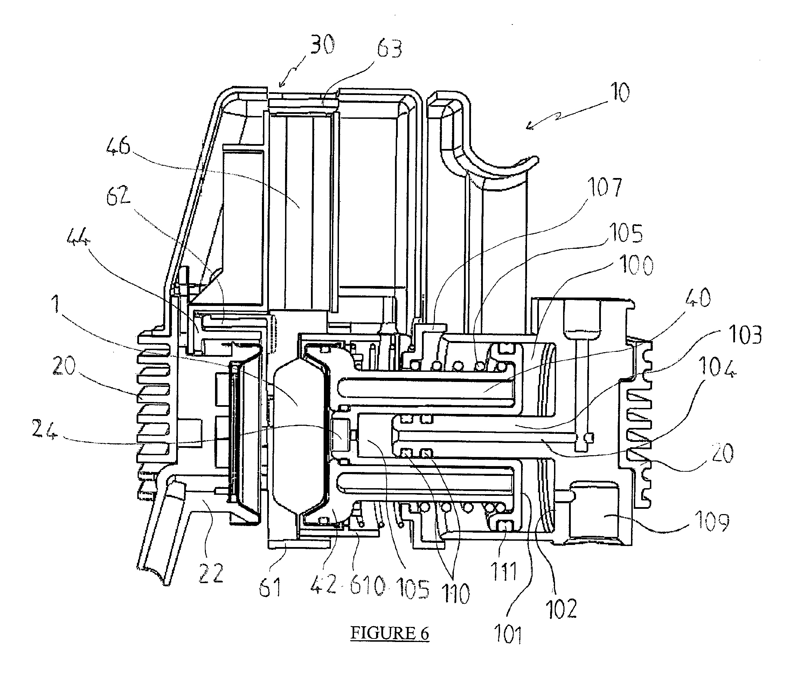

La pompe alimente la chambre de poussée 100 en passant par l'entrée 109. Une force de poussée s'applique sur la surface de poussée 101 du vérin 40, rétractant le ressort de rappel 106 et entraînant le déplacement de la tête de vérin 40 vers l'avant comme illustré en figure 6. Ce déplacement se poursuit jusqu'à ce que les deux portions 24, 42 de chambres forment un volume étanche enserrant la dose 1 comme illustré en figure 7 L'eau chauffée par la chaudière et issue du réservoir pénètre dans la chambre 7 ainsi fermée successivement par l'entrée 108 de fluide d'infusion, le canal d'alimentation 104 et les passages 105 et 24 permettant l'infusion de la dose 1. Le conduit d'évacuation 45 porté par la deuxième portion 22 permet l'extraction de la boisson vers le contenant.

Une fois l'infusion terminée, le dispositif d'entraînement non représenté et agissant sur les butées 66,66 autorise le retrait vers l'arrière du dispositif de fermeture 60. Au cours de cette translation vers l'arrière, les deuxièmes moyens de dévêtissement 44 assurent le décollement entre la dose 1 et la deuxième portion 22. Les moyens de fermeture regagnent la première position autorisant la libération de la dose 1 hors de la chambre 1. Cette phase est illustrée en figure 8.

La tête de vérin 40, sous l'effet du ressort de rappel 106 agissant en compression, amorce son retrait vers l'arrière, comme illustré en figure 9.

Les premiers moyens de dévêtissement 610 entrent au contact du pourtour de la dose 1 entraînant le décollement de celle-ci par rapport à la première portion 42. La dose 1 se trouve ainsi disposée entre les deux demi chambres sans être pour autant solidaires de l'une d'elles.

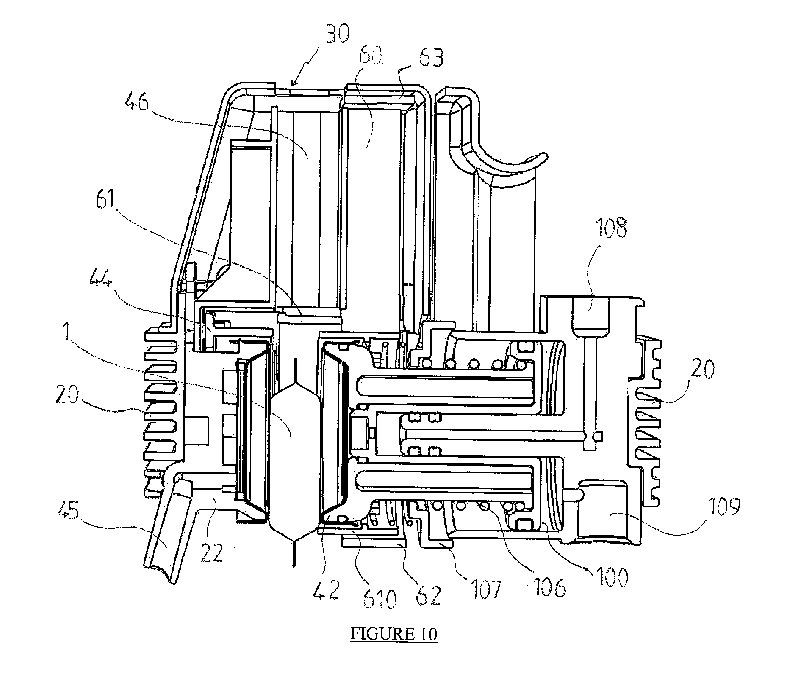

Les deux portions 22, 42 en forme de coupelles assurent sensiblement un guidage de la dose 1 vers l'ouverture de la chambre 7 lorsqu'elles s'éloignent mutuellement. Le dispositif de fermeture 60 est ramené jusqu'à la première position : les moyens de fermeture aval 62 n'entravent plus l'éjection de la dose 1 et cette dernier peut alors être évacuée vers le bac de récupération de la chambre 7 par gravité. Cette phase est illustrée en figure 10. Par ailleurs, les moyens d'obstruction 63 laissent l'ouverture de la trappe 30 libre et une nouvelle dose 1 peut être insérée dans le système 10.

Avantageusement, l'invention présente un fonctionnement qui offre une répétitivité améliorée de la qualité de la boisson obtenue et une plus grande fiabilité, les risques de blocage du mécanisme et de dégradation de l'intégrité de la dose étant réduits.

Par ailleurs, elle présente une structure et une cinématique simples. Elle présente un nombre de pièce, un coût de fabrication, un taux de défectuosité et une difficulté d'entretien réduits

En outre, elle présente un fonctionnement conditionnel, la pompe étant asservie en fonction du positionnement du dispositif de fermeture. La fiabilité du système ainsi que la sécurité des utilisateurs s'en trouvent renforcées

De plus, elle présente une robustesse améliorée et un encombrement réduit.

De nombreuses variantes peuvent être apportées au dispositif décrit précédemment sans sortir pour autant du cadre de l'invention.

Notamment, on pourra prévoir que le dispositif de fermeture 60 soit agencé de manière à translater suivant une direction principale différente de celle de l'axe longitudinal 1 1 , comme par exemple une direction principale horizontale et perpendiculaire à l'axe longitudinal 11. Pour un tel dispositif de fermeture 60 les moyens de fermeture amont 61 et aval 62 d'un tel dispositif sont décalés selon cette direction principale.

Dans l'exemple décrit précédemment, l'actionnement de la première portion 42 est complètement assuré par un vérin 40 hydraulique. Dans d'autres modes de réalisation, on peut prévoir d'assurer cet actionnement en partie au moins manuellement, au moyen d'un levier, d'une came, d'un excentrique par exemple ou au moyen d'une motorisation par exemple à vis sans fin ou encore au moyen d'un vérin pneumatique. On peut notamment prévoir que pour la fermeture de la chambre d'infusion, une partie de la course de la chambre mobile est assurée de manière manuelle par un levier, une came ou un excentrique et une autre partie de la course de la chambre mobile soit assurée par un vérin ou un moteur.

L'actionnement du dispositif de fermeture 60 est assuré par un moteur électrique ou de manière manuelle.

L'adaptation du système 10 décrit précédemment à des conditionnements différents de celui représenté sur les figures peut être effectuée aisément en modifiant les dimensions et la configuration des moyens de fermeture amont 61 et aval 62, des moyens de guidage 46, de l'ouverture de la trappe 30 ainsi que des deux demi chambres 22, 42.

### REFERENCES

| | | | |
|---|---|---|---|
| 1. | Dose | 100. | chambre de poussée |
| 10. | Système | 101. | surface de poussée |
| 11. | Axe longitudinal | 102. | fond du vérin |
| 12. | Sens avant | 103. | moyens d'emmanchement |
| 13. | Sens arrière | 104. | canal d'alimentation |
| 20. | Bâti | 105. | passage |
| 22. | Demi chambre fixe | 106. | ressort de retour |
| 24. | Conduit d'arrivée | 107. | butée pour ressort de vérin |
| 25. | Arbre | 108. | entrée de fluide à infuser |
| 30. | Trappe | 109. | entrée de fluide de poussée |
| 40. | Vérin | 110. | joints |
| 42. | Demi chambre mobile | 111. | joints |
| 44. | Deuxièmes moyens de dévêtissement | | |
| 441. | Doigt de dévêtissement | | |
| 442. | Ressort de dévêtissement | | |
| 443. | Surface d'appui | | |
| 45. | Conduit d'évacuation | | |
| 46. | Moyens de guidage | | |
| 47. | Logement pour ressort | | |
| 60. | Dispositif de fermeture | | |
| 61. | Moyens de fermeture amont | | |
| 62. | Moyens de fermeture aval | | |
| 63. | Moyens d'obstruction | | |
| 65. | Bras | | |
| 66. | Butée | | |
| | | | |
| 69. | Coulisseau | | |
| 610. | Premiers moyens de dévêtissement | | |
| 641. | Doigt de dévêtissement | | |
| 642. | Ressort de dévêtissement | | |
| | | | |
| 7. | Chambre | | |

## Revendications

1. Système (10) de production de boisson par infusion d'une dose (1) d'un produit à infuser comprenant :
• une chambre (7) d'infusion destinée à recevoir une dose (1), la chambre (7) étant définie par au moins une première (42) et une deuxième (22) portions de chambre, les portions (42, 22) étant agencées pour être mutuellement éloignées ou rapprochées afin de respectivement fermer ou ouvrir la chambre (7),
• un actionneur (40) agencé pour commander en partie au moins la fermeture de la chambre, ladite première portion (42) de chambre étant mobile et solidaire de l'actionneur (40), l'actionneur (40) étant un vérin hydraulique, la deuxième portion de chambre étant fixe,
• des moyens d'alimentation (104, 108) de la chambre,
• un dispositif de fermeture (60) comprenant :
○ des moyens de fermeture amont (61) agencés de manière à sélectivement empêcher ou à autoriser l'entrée de la dose (1) dans la chambre (7),
○ des moyens de fermeture aval (62) agencés de manière à sélectivement empêcher ou à autoriser la sortie de la dose (1) hors de la chambre (7),
• le dispositif de fermeture (60) étant agencé pour passer alternativement :
○ d'une première position dans laquelle :
- les moyens de fermeture amont (61) empêchent l'entrée de la dose (1) dans la chambre (7),
- les moyens de fermeture aval (62) autorisent la sortie de la dose (1) hors de la chambre (7),
○ à une deuxième position dans laquelle :
- les moyens de fermeture amont (61) autorisent l'entrée de la dose (1) dans la chambre (7),
- les moyens de fermeture aval (62) permettent la réception de la dose (1) introduite dans la chambre (7) et empêchent la sortie de cette dernière hors de la chambre (7),
agencé de manière à ce que :
- la position des moyens de fermeture amont (61) conditionne la position des moyens de fermeture aval (62),
- la position des moyens de fermeture aval (62) conditionne la position des moyens de fermeture amont (61),
• le système comprend au moins un conduit d'alimentation (24) conformé pour alimenter la chambre (7) en fluide à infuser,
**caractérisé en ce que** la première portion (42) de chambre comporte en partie au moins ledit conduit d'alimentation (24).

2. Système (10) selon la revendication précédente dans lequel le conduit d'alimentation (24) est connecté à un dispositif d'alimentation comprenant une chaudière située en amont de la chambre (7) d'infusion.

3. Système (10) selon l'une quelconque des revendications précédentes dans lequel les moyens de fermeture amont (61) et les moyens de fermeture aval (62) sont solidaires.

4. Système (10) selon l'une quelconque des revendications précédentes dans lequel le dispositif de fermeture (60) est distinct des première (42) et deuxième (22) portions de chambre.

5. Système (10) selon l'une quelconque des deux revendications précédentes configuré de sorte que le dispositif de fermeture (60) est apte à translater selon une direction principale et dans lequel les moyens de fermeture amont (61) et aval (62) sont disposés de manière à présenter un décalage mutuel selon ladite direction principale.

6. Système (10) selon l'une quelconque des trois revendications précédentes dans lequel le dispositif de fermeture (60) comprend un organe de guidage agencé de manière à guider le dispositif de fermeture (60) dans son déplacement alternatif en translation entre la première et la deuxième position.

7. Système (10) selon l'une quelconque des quatre revendications précédentes dans lequel le dispositif de fermeture (60) est configuré pour translater suivant un axe de déplacement et comprend une paire de butée (66, 66) réparties de chaque côté dudit axe de déplacement, chaque paire de butées (66, 66) étant configurée pour coopérer avec un doigt d'entraînement de sorte que le déplacement longitudinal du doigt d'entraînement entraîne le dispositif de fermeture (60) en translation.

8. Système (10) selon l'une quelconque des revendications précédentes dans lequel le vérin (40) comprend un piston, un cylindre définissant avec le piston une chambre de poussée (100) et des moyens de rappel (106), le vérin étant agencé de sorte que l'introduction d'un fluide sous pression dans la chambre de poussée (100) provoque le déploiement du vérin (40) et de sorte que les moyens de rappel (106) tendent à rétracter le piston.

9. Système (10) selon la revendication précédente dans lequel le piston comporte un passage (105) en communication fluidique d'une part avec le conduit d'alimentation (24) de la première portion (42) et d'autre part avec un canal d'alimentation (104) destiné à être connecté à une chaudière.

10. Système (10) selon la revendication précédente dans lequel le cylindre comporte des moyens d'emmanchement (103) solidaires du cylindre, s'étendant dans la chambre de poussée (100), conformés pour coulisser à l'intérieur du piston et logeant le canal d'alimentation (104) et dans lequel les moyens d'emmanchement (103) et le passage (105) présentent de préférence des formes complémentaires de sorte que les moyens d'emmanchement (103) coulissent à l'intérieur du passage (105) pour assurer en partie au moins le guidage du piston.

11. Système (10) selon l'une quelconque des trois revendications précédentes dans lequel le cylindre comprend un fond (102) faisant face au piston et des parois longitudinales s'étendant depuis le fond (102) pour définir avec le piston la chambre de poussée (100) et dans lequel les parois transversales sont conformées pour guider au moins en partie le piston.

12. Système (10) selon l'une quelconque des revendications précédentes dans lequel les moyens de fermeture amont (61) sont solidaires des moyens de fermeture aval (62).

13. Système (10) selon l'une quelconque des revendications précédentes, comprenant une trappe (30) définissant une ouverture disposée en amont des moyens de fermeture amont (61) et dans lequel le dispositif de fermeture (60) comprend des moyens d'obstruction (63) agencés de manière à :
• laisser libre l'ouverture de la trappe (30) lorsque le dispositif de fermeture (60) est disposé dans la première position et à,
• obstruer l'ouverture de la trappe (30) lorsque le dispositif de fermeture (60) est disposé dans la deuxième position.

14. Machine de production de boisson comprenant un système (10) selon l'une quelconque des revendications précédentes.

## Patentansprüche

1. Getränkeproduktionssystem (10) per Aufguss einer Dosis (1) eines aufzugießenden Produkts, umfassend:
* eine Aufgusskammer (7), die zur Aufnahme einer Dosis (1) bestimmt ist, wobei die Kammer (7) durch wenigstens einen ersten (42) und einen zweiten (22) Abschnitt der Kammer definiert wird, wobei die Abschnitte (42, 22) angeordnet sind, um einander entfernt oder angenähert zu werden, um jeweils die Kammer (7) zu schließen oder zu öffnen,
* ein Wirkglied (40), das angeordnet ist, um wenigstens zum Teil den Verschluss der Kammer zu steuern, wobei der genannte erste Abschnitt (42) der Kammer mobil und fest befestigt mit dem Wirkglied (40) ist, wobei das Wirkglied (40) ein Hubzylinder ist, wobei der zweite Abschnitt der Kammer fest ist,
* Versorgungsmittel (104, 108) der Kammer,
* eine Verschlussvorrichtung (60), umfassend:
○ vorgeschaltete Verschlussmittel (61), die derart angeordnet sind, dass der Eingang der Dosis (1) in die Kammer (7) verhindert oder zugelassen wird,
○ nachgeschaltete Verschlussmittel (62), die derart angeordnet sind, dass sie selektiv den Ausgang der Dosis (1) aus der Kammer (7) verhindern oder zulassen,
* wobei die Verschlussvorrichtung (60) angeordnet ist, um alternativ:
○ von einer Position, in der:
- die vorgeschalteten Verschlussmittel (61) den Eingang der Dosis (1) in die Kammer (7) verhindern,
- die nachgeschalteten Verschlussmittel (62) den Ausgang der Dosis (1) aus der Kammer (7) zulassen,
○ in eine zweite Position überzugehen, in der:
- die vorgeschalteten Verschlussmittel (61) den Eingang der Dosis (1) in die Kammer (7) zulassen,
- die nachgeschalteten Verschlussmittel (62) die Aufnahme der eingeführten Dosis (1) in die Kammer (7) zulassen und den Ausgang derselben aus der Kammer (7) verhindern,
derart angeordnet, dass:
- die Position der vorgeschalteten Verschlussmittel (61) die Position der nachgeschalteten Verschlussmittel (62) bedingt,
- die Position der nachgeschalteten Verschlussmittel (62) die Position der vorgeschalteten Verschlussmittel (61) bedingt,
* das System wenigstens einen Versorgungsleiter (24) umfasst, der angepasst ist, um die Kammer (7) mit aufzugießendem Medium zu versorgen,
**dadurch gekennzeichnet, dass** der erste Abschnitt (42) der Kammer wenigstens zum Teil den genannten Versorgungsleiter (24) umfasst.

2. System (10) gemäß dem voranstehenden Anspruch, in dem der Versorgungsleiter (24) an eine Versorgungsvorrichtung angeschlossen ist, die eine Heizung umfasst, die sich vor der Aufgusskammer (7) vorgeschaltet befindet.

3. System (10) gemäß einem der voranstehenden Ansprüche, in dem die vorgeschalteten Verschlussmittel (61) und die nachgeschalteten Verschlussmittel (62) fest miteinander verbunden sind.

4. System (10) gemäß einem der voranstehenden Ansprüche, in dem die Verschlussvorrichtung (60) unterschiedlich von den ersten (42) und zweiten (22) Abschnitten der Kammer sind.

5. System (10) gemäß einem der zwei voranstehenden Ansprüche, das derart konfiguriert ist, dass die Verschlussvorrichtung (60) geeignet ist, sich gemäß einer Hauptrichtung zu verlagern und in der die vorgeschalteten (61) und nachgeschalteten (62) Verschlussmittel derart angeordnet sind, dass sie eine gegenseitige Verschiebung gemäß der genannten Hauptrichtung aufweisen.

6. System (10) gemäß einem der drei voranstehenden Ansprüche, in dem die Verschlussvorrichtung (60) ein Führungsorgan umfasst, das derart angeordnet ist, dass es die Verschlussvorrichtung (60) in seiner alternativen Verschiebung in Translation zwischen der ersten und der zweiten Position umfasst.

7. System (10) gemäß einem der vier voranstehenden Ansprüche, in dem die Verschlussvorrichtung (60) konfiguriert ist, um sich gemäß einer Verschiebungsachse zu verschieben, und ein Anschlagspaar (66, 66) umfasst, das auf jeder Seite der genannten Verschiebungsachse verteilt ist, wobei jedes Anschlagspaar (66, 66) konfiguriert ist, um mit einem Antriebsfinger derart zusammenzuwirken, dass die Längsverschiebung des Antriebsfingers die Verschlussvorrichtung (60) in Translation antreibt.

8. System (10) gemäß einem der voranstehenden Ansprüche, in dem der Zylinder (40) einen Kolben umfasst, wobei ein Zylinder mit dem Kolben eine Schubkammer (100), und Rückholmittel (106) definiert, wobei der Zylinder derart angeordnet ist, dass das Einführen eines Mediums unter Druck in die Schubkammer (100) das Ausfahren des Zylinders (40) hervorruft, und derart, dass die Rückholmittel (106) dazu neigen, den Kolben zurückzuziehen.

9. System (10) gemäß dem voranstehenden Anspruch, in dem der Kolben einen Durchgang (105) in fluidischer Kommunikation einerseits mit dem Versorgungsleiter (24) des ersten Abschnitts (42) und andererseits mit einem Versorgungskanal (104), der zum Anschließen an eine Heizung bestimmt ist, umfasst.

10. System (10) gemäß dem voranstehenden Anspruch, in dem der Zylinder Anschäftmittel (103) umfasst, die fest mit dem Zylinder verbunden sind und sich in der Schubkammer (100) erstrecken, die angepasst sind, um im Innern des Kolbens zu gleiten und den Versorgungskanal (104) beherbergen und in dem die Anschäftmittel (103) und der Durchgang (105) bevorzugt komplementäre Formen derart aufweisen, dass die Anschäftmittel (103) im Innern des Durchgangs (105) gleiten, um wenigstens zum Teil die Führung des Kolbens zu gewährleisten.

11. System (10) gemäß einem der drei voranstehenden Ansprüche, in dem der Zylinder einen Boden (102) umfasst, der gegenüber dem Kolben liegt, und sich Längswände von dem Boden (102) erstrecken, um mit dem Kolben die Schubkammer (100) zu definieren, und in dem die Querwände angepasst sind, um wenigstens zum Teil den Kolben zu führen.

12. System (10) gemäß einem der voranstehenden Ansprüche, in dem die vorgeschalteten Verschlussmittel (61) mit den nachgeschalteten Verschlussmitteln (62) fest befestigt sind.

13. System (10) gemäß einem der voranstehenden Ansprüche, umfassend eine Klappe (30), die eine Öffnung definiert, die den vorgeschalteten Verschlussmitteln (61) vorgeschaltet angeordnet ist, und in dem die Verschlussvorrichtung (60) Verstopfungsmittel (63) umfasst, die derart angeordnet sind, dass:
* die Öffnung der Klappe (30) frei gelassen wird, wenn die Verschlussvorrichtung (60) in der ersten Position angeordnet ist und dass:
* die Öffnung der Klappe (30) verstopft wird, wenn die Verschlussvorrichtung (60) in der zweiten Position angeordnet ist.

14. Getränkepositionsmaschine mit einem System (10) gemäß einem der voranstehenden Ansprüche.

## Claims

1. System (10) for making beverages by infusing a dose (1) of a product to be infused comprising:
• an infusion chamber (7) designed to receive a dose (1), the infusion chamber (7) being defined by at least one first (42) and one second (22) chamber portions, the chamber portions (42, 22) being arranged so as to move apart from one another or come together in order to respectively open or close the infusion chamber (7),
• an actuator (40) arranged so as to control at least partially the closure of the infusion chamber (7), said first chamber portion (42) being movable and interconnected to the actuator (40), the actuator (40) being a hydraulic cylinder, the second chamber portion being fixed,
• supply means (104, 108) of the infusion chamber (7),
• a closure device (60) comprising :
○ upstream closure means (61) arranged so as to selectively prevent or allow the dose (1) to enter the infusion chamber (7),
○ downstream closure means (62) arranged so as to selectively prevent or allow the dose (1) to exit the infusion chamber (7),
• the closure device (60) being arranged so as to pass alternatively :
○ from a first position in which :
- the upstream closure means (61) prevent the dose (1) from entering the infusion chamber (7),
- the downstream closure means (62) allow the dose (1) to exit the infusion chamber (7),
○ to a second position in which :
- the upstream closure means (61) allow the dose (1) to enter the infusion chamber (7),
- the downstream closure means (62) allow to receive the dose (1) introduced into the infusion chamber (7) and prevent the latter from exiting the infusion chamber (7),
the system (10) being arranged so that :
- the position of the upstream closure means (61) conditions the position of the downstream closure means (62),
- the position of the downstream closure means (62) conditions the position of the upstream closure means (61),
• the system (10) comprises at least an incoming fluid pipe (24) configured to supply the infusion chamber (7) with fluid to be infused,
**characterized in that** the first chamber portion (42) comprises at least partially said incoming fluid pipe (24).

2. System (10) according to the above claim in that the incoming fluid pipe (24) is connected to a supply device comprising a boiler located upstream of the infusion chamber (7).

3. System (10) according to any one of the above claims in that the upstream closure means (61) and the downstream closure means (62) are interconnected to each other.

4. System (10) according to any one of the above claims in that the closure device (60) is separate from the first (42) and second (22) chamber portions.

5. System (10) according to any one of the above two claims configured so as to the closure device (60) is capable of translating along a main direction and in that the upstream closure means (61) and the downstream closure means (62) are arranged so as to have a mutual offset in said main direction.

6. System (10) according to any one of the above three claims in that the closure device (60) comprises a guide arranged to guide the closure device (60) in its reciprocating movement when the closure device (60) translates between the first and the second positions.

7. System (10) according to any one of the above four claims in that the closure device (60) is configured to translate along an axis of displacement and comprises a pair of ends of travel moving stop (66, 66) distributed on each side of said axis of displacement, each pair of the ends of travel moving stop (66, 66) being configured to cooperate with a drive finger so that longitudinal movement of the drive finger leads the closure device (60) to translate.

8. System (10) according to any one of the above claims in that the hydraulic cylinder (40) comprises a piston, a cylinder defining with the piston a thrust chamber (100) and return means (106), the hydraulic cylinder being arranged so as to introduce a pressurized fluid into the thrust chamber (100) leads the deployment of the hydraulic cylinder (40) and so that the return means (106) tend to retract the piston.

9. System (10) according to the above claim in that the piston comprises a passage (105) communicating on the one hand with the incoming fluid pipe (24) of the first chamber portion (42), and on the other hand with a supply channel (104) for being connected to a boiler.

10. System (10) according to the above claim in that the cylinder comprises fitting means (103) interconnected to the cylinder, extending in the thrust chamber (100), configured to slide within the piston and housing the supply channel (104) and wherein the fitting means (103) and the passage (105) have preferably complementary shapes so that the fitting means (103) slide within the passage (105) for guiding at least partially the piston.

11. System (10) according to any one of the above three claims in that the cylinder comprises a bottom (102) facing the piston and the longitudinal walls extending from the bottom (102) in order to define with the piston the thrust chamber (100) and wherein the transverse walls are formed for guiding at least partially the piston.

12. System (10) according to any one of the above claims in that the upstream closure means (61) are interconnected to the downstream closure means (62).

13. System (10) according to any one of the above claims comprising a trap door (30) forming an opening placed upstream of the upstream closure means (61) and in that the closure device (60) comprises obstructing means (63) arranged so as to:
• leave the opening formed by the trap door (30) unobstructed when the closure device (60) is arranged in the first position, and to
• obstruct the opening of the trap door (30) when the closure device (60) is arranged in the second position.

14. Machine for making beverages comprising a system (10) according to any one of the above claims.
